(19) Europäisches Patentamt
European Patent Office
Office européen des brevets

(11) **EP 1 049 243 B2**

(12) ## NEUE EUROPÄISCHE PATENTSCHRIFT
Nach dem Einspruchsverfahren

(45) Veröffentlichungstag und Bekanntmachung des Hinweises auf die Entscheidung über den Einspruch:
**23.10.2019 Patentblatt 2019/43**

(45) Hinweis auf die Patenterteilung:
**12.09.2007 Patentblatt 2007/37**

(21) Anmeldenummer: **00105541.7**

(22) Anmeldetag: **16.03.2000**

(51) Int Cl.:
***H02P 27/04*** *(2016.01)*

(54) **Verfahren zum Zuschalten eines Umrichters an einen Asynchronmotor und Umrichter mit einer Steuer- und Regelelektronik**

Method for connecting an coverter to an induction motor and inverter with electronic control

Méthode pour connecter un convertisseur avec un moteur asynchrone et convertisseur avec commande électric

(84) Benannte Vertragsstaaten:
**AT BE CH CY DE DK ES FI FR GB GR IE IT LI LU MC NL PT SE**

(30) Priorität: **29.04.1999 DE 19919752**

(43) Veröffentlichungstag der Anmeldung:
**02.11.2000 Patentblatt 2000/44**

(73) Patentinhaber: **SEW-EURODRIVE GmbH & Co. KG 76646 Bruchsal (DE)**

(72) Erfinder:
• **Wolf, Harald**
**76694 Forst (DE)**
• **Hammel, Wolfgang**
**76646 Bruchsal (DE)**

(56) Entgegenhaltungen:
**EP-A- 0 780 967       DE-A- 4 107 362**
**US-A- 4 764 712       US-A- 5 654 624**

• **JU-SUK LEE ET AL: "Optimized stator-flux-oriented sensorless drives of IM in low-speed performance" INDUSTRY APPLICATIONS CONFERENCE, 1996. THIRTY-FIRST IAS ANNUAL MEETING, IAS '96., CONFERENCE RECORD OF THE 1996 IEEE SAN DIEGO, CA, USA 6-10 OCT. 1996, NEW YORK, NY, USA,IEEE, US, 6. Oktober 1996 (1996-10-06), Seiten 250-256, XP010201133 ISBN: 0-7803-3544-9**
• **LUOMI, J.: "Transient Phenomena in Electrical Machines", Lecture notes for a course in electrical machines, 1998, pages 3:11-12-4:4, Göteborg**
• **PETERSON, B.: "Induction Machine Speed Estimation, Observations on Observers", IEA, 1996, page 84,**
• **Leonhard, W.: "Control of Electrical Drives" In: 1996, Springer Verlag -2nd ed., Berlin pages 244-245-276-281,**

**EP 1 049 243 B2**

**Beschreibung**

Die Erfindung betrifft ein Verfahren zum drehmomentfreien Zuschalten eines Umrichters an einen zu Beginn entmagnetisierten Asynchronmotor.

Beim Betrieb eines über einen Umrichter gespeisten, drehzahlgeberlosen Asynchronmotors ist bei manchen Anwendungen ein Zuschalten auf einen, auch mit unbekannter Drehzahl drehenden Asynchronmotor notwendig.

Nach dem Abschalten des Asynchronmotors klingt der Rotor-Fluss exponentiell mit den Rotor-Zeitkonstanten ab. Vor Aufnahme des geregelten Betriebs muss daher der Rotor-Fluss aufgebaut werden. Hierbei dürfen keine störenden Drehmomente auftreten. Nach dem Wiederaufbau des Rotor-Flusses kann der geregelte oder gesteuerte Normalbetrieb wiederaufgenommen werden.

Der Vorgang des Aufmagnetisierens des Motors und Feststellens der zuvor unbekannten Drehzahl wird als sogenannter 'Fangbetrieb' bezeichnet. Je weniger Zeit für den Fangbetrieb erforderlich ist, um so schneller kann der Normalbetrieb aufgenommen werden.

Aus den Schriften DE 32 02 906, DE-OS 35 43 983 sowie DE 35 43 933 sind Verfahren zum Zuschalten eines Umrichters an einen drehzahlgeberlosen Asynchronmotor bekannt. Diese Verfahren sind Suchverfahren, bei denen die Frequenz der Ausgangsspannung einen Frequenzbereich durchläuft und aus den ermittelten Strömen und Spannungen die Synchronfrequenz bestimmt wird. Von Nachteil ist bei diesen Suchverfahren der hohe Zeitbedarf für den Suchvorgang von typischerweise einigen Hundert Millisekunden. Darüber hinaus darf während des Suchvorgangs bis zum Finden der Synchronfrequenz der Motor nur geringfügig aufmagnetisiert werden um das entstehende Drehmoment möglichst gering zu halten. Um eine sichere Erkennung der Synchronfrequenz zu gewährleisten, muss jedoch ein gewisses Drehmoment in Kauf genommen werden. Da der Motor bis zum Finden der Synchronfrequenz nur geringfügig aufmagnetisiert werden konnte, muss die eigentliche Aufmagnetisierung im Anschluss daran erfolgen, was eine weitere Zeitverzögerung bis zur Aufnahme des geregelten Betriebs bedeutet.

Aus der EP 0 469 177 ist ein Verfahren bekannt, welches unter Ausnutzung des Remanenzeffektes die Drehzahl ermittelt. Die Auswertung der durch die Remanenz des Rotors induzierten Klemmenspannung muss hierbei durch eine zusätzliche Schaltungsanordnung zur Spannungsmessung erfolgen, da während des Messvorgangs die Wechselrichterimpulse gesperrt bleiben. Nachteilig hierbei ist, dass zur ordnungsgemäßen Funktion eine Mindestremanenz und eine Mindestdrehzahl erforderlich ist.

In der DE 35 43 941 wird dieses auf der Auswertung der durch die Remanenz des Rotors induzierten Spannungen basierende Verfahren dahingehend erweitert, dass durch eine Impulsvervielfachung eine Drehzahlbestimmung auch bei geringen Drehzahlen schneller möglich ist. Die oben genannten Nachteile der EP 0 469 177 bleiben prinzipbedingt jedoch auch hier bestehen.

In der DE 195 03 658 ist ein Verfahren beschrieben, welches bei noch vorhandenem Restfluss oder ausreichender Remanenz die Drehzahlbestimmung aus der zeitlichen Ableitung des Drehwinkels des induzierten Statorspannungszeigers ermöglicht. Falls der Restfluss oder die Remanenz keine auswertbare Spannung induziert, wird durch Aufschalten eines einzelnen Spannungspulses eine zumindest teilweise Aufmagnetisierung des Rotors erreicht. Dadurch werden die gleichen Ausgangsbedingungen wie bei vorhandenem Restfluss oder einer vorhandenen Remanenz geschaffen, so dass wieder das vorgenannte Auswerteverfahren verwendet werden kann.

Ein Verfahren zum Anlassen eines Asynchronmotors ohne vorhandenen Restfluss ist aus der DE 195 32 477 bekannt. Dieses Verfahren weist Schritte auf, in denen der Statorstromzeiger bestimmt wird, ein von der Spannung generierter Statorflusszeiger oder eine Schätzung davon bestimmt wird, ein vom Statorflusszeiger und Statorstromzeiger verursachtes Moment bestimmt wird, welches einer Regelung gespeist wird, die das gebildete Moment zu Nullen versucht. In diesem Verfahren wird also das Regelsystem des Umrichters benutzt, das bei konventioneller Anwendung das Moment und den Fluss oder den Momenten- und den Magnetisierungsstrom der Asynchronmaschine regelt. Eine Anregung erfährt das Regelsystem durch einen kurzen Stromimpuls, woraus folgt, dass bei eventueller Rotation der Maschine ein Moment gebildet wird, das von dem Regelsystem wunschgemäß geregelt werden kann, d.h. im Fall dieser Erfindung gegen Nullmoment oder einen Zustand indem der Statorfluss und der Rotorfluss gleichphasig sind und in dem die Speisefrequenz des Inverters also mit der eventuellen Rotation des Rotors synchronisiert ist. Dieses Verfahren erfordert ein Regelsystem zur Moment und Fluss bzw. zur Momenten- und Magnetisierungsstromregelung. Außerdem ist es erforderlich den Istwert des Drehmomentes zu berechnen.

Aus der EP 0 780 967 A2 ist ein Verfahren zum Starten mit Anfangsdrehzahl 0 ausgeführt, also das Inbewegungsetzen von der Ruheposition ausgehend. Dabei wird die elektrische Frequenz entsprechend dem Schlupf eingestellt. Dabei gilt bis zum Umschalten zum Normalbetrieb. Nachteilig ist dabei, dass das Verfahren nicht anwendbar ist bei einer unbekannten Drehzahl, wenn diese nicht 0 ist. Denn der Schlupf ist dann ungleich der elektrischen Frequenz.

Aus der US 4 764 712 ist wiederum ein Starten von der Drehzahl 0 aus bekannt (Spalte 2, Zeile 38 und Anspruch 1 Merkmal (a)). Für andere Anfangsdrehzahlen entsteht also wiederum die vorgenannte Problematik.

Aus der US 5 654 624 ist ein Verfahren zum Fangen bekannt, wobei die wesentliche Idee dabei ist, dass für das Fangen und den Normalbetrieb das identische Regelverfahren verwendet wird - nur mit der Besonderheit, dass beim Fangen der Drehmoment-Sollwert auf Null gesetzt wird. Es wird dabei durch eine überlagerte Drehmomentenregelung versucht Parallelität zu erreichen. Es wird also die Parallelität als Ergebnis einer Regelung angestrebt und nicht von vorneherein direkt vorgegeben.

Aus der DE 41 07 362 A1 ist ein Zuschalten bekannt, bei dem gemäß Spalte 3, Zeile 36 die Eingabe eines Parameters notwendig ist. Nachteilig ist dabei, dass immer ein kleines Drehmoment vorhanden sein muss, zumindest in der Größenordnung der Regelabweichungen um den Sollwert 0 herum. Außerdem kann der Suchvorgang beim Fangen mehrere zig Sekunden dauern, insbesondere dann wenn die Startfrequenz und die tatsächliche Frequenz sehr verschieden sind. Außerdem ist zwar ein Stromregler vorhanden, aber dessen Stellgröße ist die Frequenz.

Der vorliegenden Erfindung liegt die Aufgabe zugrunde, einerseits ein Verfahren anzugeben, welches das Fangen einer Asynchronmaschine ohne vorhandenen Restfluss oder Remanenz in sehr kurzer Zeit ermöglicht und zusätzlich einen geringen Realisierungs- und Durchführungsaufwand aufweist, und andererseits einen Umrichter mit einer Steuer- und Regeleinheit weiterzubilden, dessen Steuer- und Regeleinheit derart gestaltet ist, dass sie das erfindungsgemäße Verfahren zum Steuern und Regeln verwendet. Insbesondere soll das Verfahren die Berechnung des Drehmomentes, des Rotorflusses oder des Momenten- oder Magnetisierungsstromes nicht erfordern. Es soll lediglich eine Stromregeleinrichtung für den Statorstromzeiger verwendet werden.

Erfindungsgemäß wird die Aufgabe bei einem Verfahren zum drehmomentfreien Zuschalten eines Umrichters an einen zu Beginn entmagnetisierten Asynchronmotor, gelöst nach den in Anspruch 1 angegebenen Merkmalen. Ein wesentliches Merkmal der Erfindung ist, dass das Verfahren die Berechnung des Drehmomentes, des Rotorflusses oder des Momenten- oder Magnetisierungsstromes nicht erfordert. Es wird lediglich eine Stromregeleinrichtung für den Statorstromzeiger verwendet. Ein wesentlicher Vorteil ist dabei, dass ein Verfahren angegeben wird, das das Fangen einer Asynchronmaschine ohne vorhandenen Restfluss oder Remanenz in sehr kurzer Zeit ermöglicht und zusätzlich einen geringen Realisierungs- und Durchführungsaufwand aufweist.

Erfindungsgemäß wird die Richtung des Sollwerts für den Statorstromzeiger $\underline{i}_{S,Soll}$ direkt aus der Richtung des Statorflusszeigers $\underline{\Psi}_{S,mod}$ bestimmt, und es wird die Richtung des Sollwerts für den Statorstromzeiger $\underline{i}_{S,Soll}$ im Wesentlichen parallel zur Richtung des Statorflusszeigers $\underline{\Psi}_{S,mod}$ gewählt, oder es wird die Richtung des Sollwerts für den Statorstromzeiger $\underline{i}_{S,Soll}$ parallel gewählt zur Richtung des Statorflusszeigers $\underline{\Psi}_{S,mod}$, solange der Betrag des Statorflusszeigers $\underline{\Psi}_{S,mod}$ einen Schwellwert überschreitet. Von Vorteil ist dabei jeweils, dass in besonders einfacher Weise die Richtung des Sollwerts für den Statorstromzeiger $\underline{i}_{S,Soll}$ verfügbar ist.

Erfindungsgemäß wird die Richtung des Sollwerts für den Statorstromzeiger $\underline{i}_{S,Soll}$ beliebig gewählt, solange der Betrag des Statorflusszeigers $\underline{\Psi}_{S,mod}$ einen Schwellwert unterschreitet. Von Vorteil ist dabei wiederum, dass in besonders einfacher Weise die Richtung des Sollwerts für den Statorstromzeiger $\underline{i}_{S,Soll}$ verfügbar ist.

In einer weiteren Ausführungsform wird während des Zuschaltens die Winkelgeschwindigkeit einer Zeiger-Größe, wie Statorflusszeiger, Statorstromzeiger, Spannungszeiger oder dergleichen, gebildet und daraus ein Wert für die elektrische Frequenz bestimmt. Von Vorteil ist dabei, dass für eine Übergabe an einen zeitlich nachfolgenden geregelten Betrieb geeignete Werte errechenbar sind und somit die Initialisierung eines solchen in einfacher Weise durchführbar ist.

In einer weiteren Ausführungsform ist der Betrag des Statorstromzeigers $I = |\underline{i}_{S,Soll}|$ eine Funktion der elektrischen Frequenz. Vorteilhaft ist dabei der dadurch erreichbare Schutz gegen das Überschreiten der Spannungsstellgrenze.

In einer weiteren Ausführungsform ist die Funktion derart gewählt, dass die Magnetisierung im Wesentlichen möglichst groß wird unter Einhaltung der Spannungsstellgrenze des Umrichters. Vorteilhaft ist dabei, dass der Rotor sehr schnell aufmagnetisiert wird und innerhalb kurzer Zeit ein hohes Moment verfügbar ist.

In einer weiteren Ausführungsform ist die Funktion unterhalb eines Frequenzwertes im Wesentlichen konstant und nimmt oberhalb dieses Frequenzwertes mit Zunahme der elektrischen Frequenz ab. Vorteilhaft ist dabei der dadurch erreichbare Schutz gegen das Überschreiten der Spannungsstellgrenze, wobei in kurzer Zeit ein Aufmagnetisieren des Rotors erreichbar ist.

In einer weiteren Ausführungsform wird eine Regeleinheit zur Regelung des Betrages des Statorspannungszeigers $|\underline{u}_S|$ verwendet, welcher als Stellgröße den Betrag des Statorstromzeigers $I = |\underline{i}_{S,Soll}|$ ausgibt. Von Vorteil ist dabei, dass auch eine Netzspannungsänderung berücksichtigbar ist.

In einer weiteren Ausführungsform werden während einer Zeitspanne vor Beendigung des Zuschaltens zuletzt ermittelte Größen, wie Statorspannungszeiger $\underline{u}_S$ und/oder Statorstromzeiger $\underline{i}_S$ und/oder Sollwert für Statorstromzeiger $\underline{i}_{S,Soll}$ und/oder Statorflusszeiger $\underline{\Psi}_{S,mod}$ und/oder deren zeitlichen Ableitungen, oder auch höheren Ableitungen oder dergleichen, zur Initialisierung eines zeitlich nachfolgenden, beliebigen Regelverfahrens übergeben. Von Vorteil ist dabei, dass für eine Übergabe an einen zeitlich nachfolgenden geregelten Betrieb geeignete Werte errechenbar sind und somit die Initialisierung eines solchen in einfacher Weise durchführbar ist.

Nachfolgend wird die Erfindung anhand von Zeichnungen erläutert.

Das in einer Asynchronmaschine entstehende Drehmoment bestimmt sich gemäß

$$M_i = \frac{3}{2} \cdot Z_P \cdot \left( \underline{\psi_S} \times \underline{I_S} \right) \qquad (1)$$

wobei

$M_i$ = inneres Moment
$Z_P$ = Polpaarzahl der Asynchronmaschine
$\underline{\Psi_S}$ = Statorflusszeiger
$\underline{I_S}$ = Statorstromzeiger

Aus (1) ist direkt ersichtlich, dass genau dann kein Drehmoment entsteht, wenn der Statorstromzeiger parallel zum Statorflusszeiger ist. Um ein drehmomentfreies Aufmagnetisieren des Motors zu erreichen, wird der Statorstromzeiger derart eingeprägt, dass er zum Statorflusszeiger parallel ist. Dies wird erreicht, indem einem untergeordneten ausreichend schnellen Stromregler ein Sollstromzeiger vorgegeben wird, der zum Statorflusszeiger parallel ist. Notwendig ist hierzu die Kenntnis der Richtung des Statorflusszeigers.
Der Statorflusszeiger wird berechnet gemäß

$$\underline{\psi_S} = \int \left( \underline{U_S} - R_S \cdot \underline{I_S} \right) \cdot dt \qquad (2)$$

wobei

$\underline{U_S}$ = Statorspannungszeiger
$\underline{R_S}$ = Statorwiderstand

Gemäß Gleichung (2) wird der Statorflusszeiger aus dem Statorspannungszeiger und dem Statorstromzeiger bestimmt. Als einziger Parameter der Asynchronmaschine muss hierzu der Statorwiderstand bekannt sein. Erfindungsgemäß werden geeignete Messmittel zur Bestimmung des Statorspannungs- und Statorstromzeigers vorgesehen.

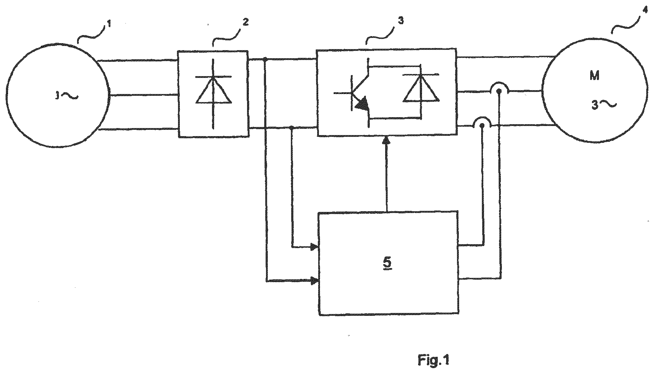

Fig. 1 zeigt eine Vorrichtung zur Verwirklichung des erfindungsgemäßen Verfahrens. Darin wird über einen Gleichrichter 2 die Netzspannung 1 zu einer Gleichspannung gleichgerichtet, welche dem Wechselrichter 3 als Zwischenkreisspannung zugeführt wird. Der Drehstrommmotor 4 ist mit den Ausgangsklemmen des Wechselrichters 3 verbunden. Der Wechselrichter 3 wird durch die Steuereinheit 5 angesteuert. Der Steuereinheit 5 wird die gemessene Zwischenkreisspannung zugeführt. Des Weiteren werden mindestens zwei der drei Motorphasenströme erfasst und dem Regelsystem 5 zugeführt. Innerhalb des Regelsystems 5 wird aus den erfassten Motorphasenströmen der Statorstromzeiger bestimmt. Der Statorspannungszeiger wird aus der erfassten Zwischenkreisspannung und dem Schaltzustand des Wechselrichters ermittelt.

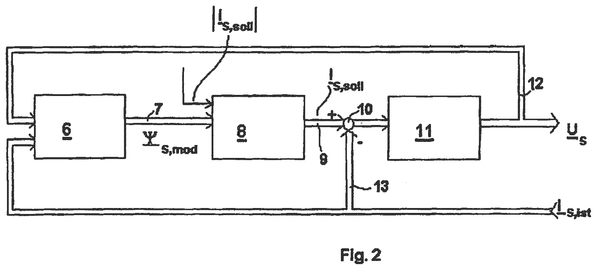

In der Fig. 2 ist der erfindungsgemäße Teil des Regelsystems 5 dargestellt. Aus dem erfassten Statorspannungszeiger und dem Statorstromzeiger wird im Fluss-Schätzer 6 der Statorflusszeiger 7 ermittelt. Dieser Schätzung liegt im Wesentlichen die Gleichung (2) zugrunde. Bei weiteren Ausführungsbeispielen werden andere Verfahren zur Schätzung des Statorflusszeigers verwendet, die dem Statorflusszeiger entsprechende Größen ergeben.
Der Schätzwert des Statorflusszeigers 7 wird dem Stromsollwertgeber 8 zugeführt. Dieser erzeugt einen Sollwert für den Statorstromzeiger 9 in Richtung des Statorflusszeigers mit einem vorgebbaren Betrag $|I_{soll}|$. Über den Subtrahierer 10 wird die Abweichung des Statorstromzeigers 13 vom Sollwert des Statorstromzeigers 9 bestimmt und dem Stromregler 11 zugeführt. Der Stromregler 11 wird als Standard-Regler, wie aus dem Stand der Technik bekannte PI-Phasenstromregler oder dergleichen, ausgeführt.
Der Stromregler 11 erzeugt einen geeigneten Wert für den Statorspannungszeiger 12, so dass der Statorstromzeiger 13 seinem Sollwert 9 nachgeführt wird. Eine hohe Bandbreite des Stromreglers 11 ist anzustreben, da dann die Regeldifferenz gering bleibt und somit auch der Statorstromzeiger zum Statorflusszeiger parallel ist. Standard-Regler sind als Stromregler verwendbar und genügen diesen Anforderungen.
Der Statorflusszeiger stellt eine Zustandsgröße dar und wird zu Beginn des Fangvorgangs mit einem Startwert initialisiert. Ein drehmomentfreies Fangen ist nur dann gewährleistet, wenn der Startwert des geschätzten Statorflusszeigers mit dem tatsächlichen übereinstimmt. Dies wird erreicht, indem sichergestellt wird, dass der Motor entmagnetisiert ist, so dass der Startwert zu Null gewählt werden kann. In einem erfindungsgemäßen Ausführungsbeispiel wird dies durch Einhalten einer Zeitbedingung nach dem vorhergehenden Abschalten des Umrichters erreicht, da der Fluss im Motor mit der Rotorzeitkonstanten abklingt.
Da der Fluss-Schätzer zu Beginn des Fangvorgangs mit Null initialisiert wird, kann aus dem Statorflusszeiger keine Richtung für den Stromsollwert bestimmt werden. In diesem Fall ist die Richtung des Sollstromzeigers frei wählbar, da bei entmagnetisiertem Motor generell kein Drehmoment entsteht.

Für die Richtung des Stromsollwertzeigers wird, sofern der Betrag des Statorflusszeigers einen festgelegten Grenzwert unterschreitet, ein freigewählter Wert verwendet. Dieser Wert kann insbesondere eine feste Richtung darstellen. Erst wenn der Betrag des Statorflusszeigers diesen Grenzwert überschreitet, wird die Richtung des Statorflusszeigers für die Richtung des Stromsollwertzeigers verwendet.

Da der Betrag des Statorflusszeigers während des Fangvorganges durch die zunehmende Magnetisierung des Motors über der Zeit zunimmt, wird in einem weiteren erfindungsgemäßen Ausführungsbeispiel an Stelle des Betrages des Statorflusszeigers in vorteilhafter Weise die seit dem Beginn des Fangvorganges verstrichene Zeit als Kriterium verwendet, ob die Richtung des Statorstromzeigers oder eine frei wählbare Richtung für die Richtung des Stromsollwertzeigers verwendet wird. In diesem Ausführungsbeispiel wird zu Beginn des Fangvorgangs die Richtung des Stromsollwertzeigers auf einen beliebigen Wert, insbesondere einen konstanten Wert, gesetzt. Nach Verstreichen der festgelegten Zeitspanne wird die Richtung entsprechend dem Statorflusszeiger vorgegeben.

Das erfindungsgemäße Verfahren gewährleistet, dass sämtliche Zeiger-Größen während des gesamten Fangvorgangs synchron zur mit der Polpaarzahl des Motors multiplizierten mechanischen Drehzahl umlaufen, da nur dann ein von Null verschiedener Statorstromzeiger kein Drehmoment erzeugt. Durch die oben beschriebene Art der Vorgabe des Statorstromzeigers ist diese Bedingung zwangsläufig erfüllt. Es kann also schon während des Fangvorgangs die Synchronfrequenz fortlaufend ermittelt werden, indem die zeitliche Ableitung des Winkels einer dieser Zeiger-Größen gebildet wird.

Die Vorgabe des Betrags des Statorstromzeigers für den Stromsollwertgeber 8 erfolgt unter Berücksichtigung folgender zweier Gesichtspunkten. Zum ersten ist der Betrag des Statorstromzeigers möglichst groß zu wählen, um ein rasches Aufmagnetisieren des Motors zu erzielen. Damit geht einher, dass die im Regelsystem verwendeten Mess- und Regelgrößen sehr schnell Amplituden annehmen, die einen ausreichenden Abstand zum Messrauschen aufweisen. Zum zweiten ist es vorteilhaft, den Betrag des Statorstromzeigers so zu begrenzen, dass die erforderliche Motorspannung die Spannungsstellgrenze des Umrichters nicht überschreitet.

Folgende zwei in verschiedenen Ausführungsbeispielen realisierten Lösungen tragen diesem Gesichtspunkt Rechnung:

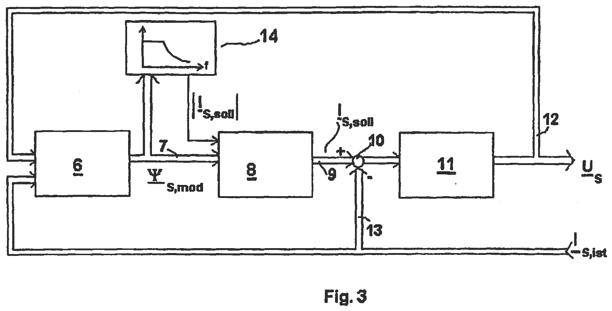

1. Da die notwendige Ausgangsspannung im Wesentlichen vom Momentanwert der Frequenz und der Amplitude des Statorflusses und somit von der Amplitude des Statorstromzeigers abhängt, erfolgt bei einem erfindungsgemäßen Ausführungsbeispiel eine feste Zuordnung des maximalen Betrages des Statorstromes in Abhängigkeit der Momentanfrequenz. Die erforderliche Kenntnis des Momentanwertes der Frequenz ist, wie oben beschrieben, gegeben. Eine derartige Zuordnung kann unter Berücksichtigung des maximal möglichen Umrichter- bzw. Motorstromes unterhalb einer bestimmten Frequenzgrenze konstant sein und oberhalb dieser mit zunehmender Frequenz abnehmen. In der Fig. 3 ist ein Ausführungsbeispiel des erfindungsgemäßen Verfahrens dargestellt, in der die Vorgabe der Amplitude des Statorstromzeiger mittels des Strombetragsgebers 14 erfolgt. Diesem wird zur Bestimmung der Frequenz der Statorflusszeiger 7 zugeführt. Der Betrag des Statorstromzeigers wird anschließend als Funktion der Frequenz bestimmt.

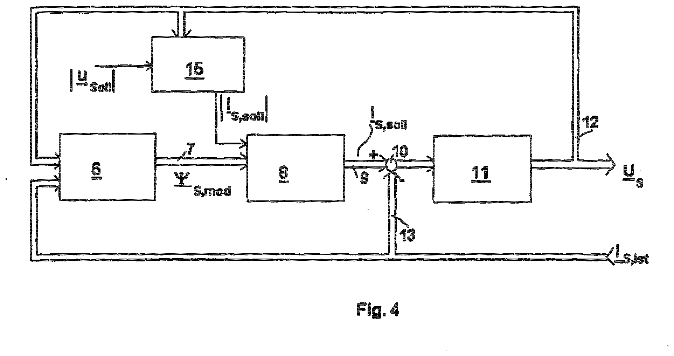

2. Anstelle einer festen Zuordnung wird bei einem weiteren Ausführungsbeispiel ein überlagerter Regler vorgesehen, welchem der Betrag des Statorspannungszeigers oder eine vergleichbare Größe, wie das Produkt aus dem Betrag des Statorspannungszeigers und der Momentanfrequenz oder dergleichen, zugeführt wird. Dieser regelt den Betrag des Statorspannungszeigers auf einen Wert der unterhalb der Spannungsstellgrenze des Umrichters liegt. Die Stellgröße dieses Reglers ist der Betrag des Statorstromzeigers, welcher dem Stromsollwertgeber 8 zugeführt wird. Fig. 4 zeigt eine Ausführungsform des erfindungsgemäßen Verfahrens, in dem ein Spannungsbetragsregler 14 den Betrag des Statorstromzeigers $I = |i_{S,Soll}|$ als Stellgröße ausgibt und dieser dem Stromsollwertgeber 8 zugeführt wird. Der Spannungsbetragsregler erhält den Statorspannungszeiger 12 und den Sollwert $|u_{soll}|$ zugeführt.

Das beschriebene erfindungsgemäße Verfahren ist bei weiteren Ausführungsbeispielen geeignet, ein Zuschalten auf eine sich drehende Asynchronmaschine bei zeitlich nachfolgender Verwendung aller üblichen, dem Stand der Technik zugehörenden, geberfreien Regelverfahren zur Steuerung einer Asynchronmaschine zu ermöglichen. Bei solchen weiteren Ausführungsbeispielen werden alle zur Initialisierung des sich anschließenden Regelverfahrens notwendigen Größen während des Fangbetriebes gewonnen und/oder abgeleitet. Bei diesen Größen handelt es sich im Wesentlichen um den Statorspannungszeiger $u_S$, den Statorstromzeiger $i_S$, den Statorflusszeiger $\Psi_{S,mod}$ und die elektrische Frequenz.

Die Erfindung umfasst auch alle Umrichter, die gemäß mindestens einem der beschriebenen Verfahren arbeiten. Die Steuer- und Regeleinheit solcher Umrichter ist derart gestaltet, dass das beschriebene erfindungsgemäße Verfahren in Hardware und/oder in Software ausführbar ist.

Bezugszeichenliste:

| | |
|---|---|
| 1 | Netzspannung |
| 2 | Gleichrichter |
| 3 | Wechselrichter |
| 4 | Elektromotor |
| 5 | Steuereinheit |
| 6 | Fluss-Schätzer |
| 7 | Statorflusszeiger |
| 8 | Stromsollwertgeber |
| 9 | Statorstromsollwertzeiger |
| 10 | Subtrahierer |
| 11 | Stromregler |
| 12 | Statorspannungszeiger |
| 13 | Statorstromzeiger |
| 14 | Strombetraggeber |
| 15 | Spannungsbetragregler |

**Patentansprüche**

**1.** Verfahren zum drehmomentfreien Zuschalten eines Umrichters an einen zu Beginn entmagnetisierten Asynchronmotor,
wobei der Rotor gegenüber dem Stator vor und/oder während des Zuschaltens mit einer unbekannten beliebigen Drehzahl rotiert,
und wobei der Umrichter den Asynchronmotor speist und der Umrichter eine Steuer- und Regelschaltung aufweist, die den Statorstrom des Asynchronmotors regelt,
und wobei kein Winkelsensor oder Drehzahlsensor notwendig ist,
wobei
ein an den Klemmen der Statorwicklungen anliegender Statorspannungszeiger ($u_S$) von der Steuer- und Regelschaltung bestimmt wird,
und dass ein durch die Statorwicklungen fließender Statorstromzeiger ($i_S$) bestimmt wird, und dass aus Statorspannungszeiger ($u_S$) und Statorstromzeiger ($i_S$) ein Schätzwert für den Statorflusszeiger ($\Psi_{S,mod}$) oder für eine dem Statorflusszeiger ($\Psi_{S,mod}$) entsprechende Größe bestimmt wird,
**dadurch gekennzeichnet, dass**
ohne Berechnung des Drehmoments
aus dem Schätzwert für den Statorflusszeiger ($\Psi_{S,mod}$) oder der dem Statorflusszeiger ($\Psi_{S,mod}$) entsprechenden Größe ein Sollwert für den Statorstromzeiger $i_{S,Soll}$ bestimmt wird, wobei dessen Betrag $I = |i_{S,Soll}|$ vorgebbar ist,
und dass dem Stromregler (11) dieser so bestimmte Sollwert für den Statorstromzeiger
($i_{S,Soll}$) und der Statorstromzeiger als Istwert ($i_S$) zugeführt wird und der Stromregler (11) einen Wert für den Statorspannungszeiger ($u_S$) so erzeugt, dass der Statorstrom ($i_S$) auf den Sollwert ($i_{S,Soll}$) geregelt wird,
wobei die Richtung des Sollwerts für den Statorstromzeiger ($i_{S,Soll}$) beliebig gewählt wird, solange der Betrag des Statorflusszeigers ($\Psi_{S,mod}$) einen Schwellwert unterschreitet, und andernfalls die Richtung des Sollwerts für den Statorstromzeiger ($i_{S,Soll}$) direkt aus der Richtung des Statorflusszeigers ($\Psi_{S,mod}$) bestimmt wird und parallel zur Richtung des Statorflusszeigers ($\Psi_{S,mod}$) gewählt wird.

**2.** Verfahren nach Anspruch 1,
**dadurch gekennzeichnet, dass**
während des Zuschaltens die Winkelgeschwindigkeit einer Zeiger-Größe, wie Statorflusszeiger, Statorstromzeiger, Spannungszeiger oder dergleichen, gebildet wird und daraus ein Wert für die elektrische Frequenz bestimmt wird.

**3.** Verfahren nach einem der vorangegangenen Ansprüche,
**dadurch gekennzeichnet, dass**
der Betrag des Statorstromzeigers $I = |i_{S,Soll}|$ eine Funktion der elektrischen Frequenz ist.

**4.** Verfahren nach Anspruch 3,

**dadurch gekennzeichnet, dass**
die Funktion derart gewählt ist, dass die Magnetisierung im Wesentlichen möglichst groß wird unter Einhaltung der Spannungsstellgrenze des Umrichters.

**5.** Verfahren nach Anspruch 4,
**dadurch gekennzeichnet, dass**
die Funktion unterhalb eines Frequenzwertes im Wesentlichen konstant ist und oberhalb dieses Frequenzwertes mit Zunahme der elektrischen Frequenz abnimmt.

**6.** Verfahren nach einem der Ansprüche 1 bis 3,
**dadurch gekennzeichnet, dass**
eine Regeleinheit zur Regelung des Betrages des Statorspannungszeigers ($|\underline{u}_S|$) verwendet wird, welcher als Stellgröße den Betrag des Statorstromzeigers $I = |\underline{i}_{S,Soll}|$ ausgibt.

**7.** Verfahren nach einem der vorangegangenen Ansprüche,
**dadurch gekennzeichnet, dass**
während einer Zeitspanne vor Beendigung des Zuschaltens zuletzt ermittelte Größen, wie Statorspannungszeiger ($\underline{u}_S$) und/oder Statorstromzeiger ($\underline{i}_S$) und/oder Sollwert für Statorstromzeiger ($\underline{i}_{S,Soll}$) und/oder Statorflusszeiger ($\overline{\underline{\Psi}_{S,mod}}$) und/oder deren zeitlichen Ableitungen, oder auch höheren Ableitungen oder dergleichen, zur Initialisierung eines zeitlich nachfolgenden, beliebigen Regelverfahrens übergeben werden.

## Claims

**1.** A method of connecting in a torque-free manner a converter to an asynchronous motor demagnetized at the outset, wherein the rotor rotates with respect to the stator before and/or during the connexion at any unknown rotational speed, and wherein the converter feeds the asynchronous motor and the converter has a control and regulating circuit which regulates the stator current of the asynchronous motor, and wherein no angle sensor or rotational-speed sensor is necessary, wherein a stator-voltage vector ($\underline{u}_S$) present at the terminals of the stator windings is determined by the control and regulating circuit, and a stator-current vector ($\underline{i}_S$) flowing through the stator windings is determined, and an estimated value or model value for the stator-flux vector ($\underline{\Psi}_{S,mod}$) or for a value corresponding to the stator-flux vector ($\underline{\Psi}_{S,mod}$) is determined from the stator-voltage vector ($\underline{u}_S$) and the stator-current vector ($\underline{i}_S$), **characterised in that** a nominal value for the stator-current vector ($\underline{i}_{S,Soll}$) is determined, without calculation of the torque, from the estimated value or model value for the stator-flux vector ($\underline{\Psi}_{S,mod}$) or the value corresponding to the stator-flux vector ($\underline{\Psi}_{S,mod}$), wherein the magnitude $I = |\underline{i}_{S,Soll}|$ of the said stator-current vector ($\underline{i}_{S,Soll}$) is pre-determinable, and the said nominal value determined in this way for the stator-current vector ($\underline{i}_{S,Soll}$) and the stator-current vector is supplied as an actual value (is) to the current regulator (11), and the current regulator (11) produces a value for the stator-voltage vector ($\underline{u}_S$) in such a way that the stator current ($\underline{i}_S$) is regulated to the nominal value ($\underline{i}_{S,Soll}$), wherein the direction of the nominal value for the stator-current vector ($\underline{i}_{S,Soll}$) is arbitrarily selected, provided that the amount of the stator-flux vector ($\underline{\Psi}_{S,mod}$) does not reach a threshold value, and otherwise the direction of the nominal value for the stator-current vector ($\underline{i}_{S,Soll}$) is determined directly from the direction of the stator-flux vector ($\underline{\Psi}_{S,mod}$) and is selected to be parallel to the direction of the stator-flux vector ($\underline{\Psi}_{S,mod}$).

**2.** A method according to Claim 1, **characterized in that** the angle speed of a vector value, such as the stator-flux vector, the stator-current vector, the voltage vector or the like, is formed during the connexion and a value for the electrical frequency is determined from it.

**3.** A method according to one of the preceding Claims, **characterized in that** the magnitude of the stator-current vector $I = |\underline{i}_{S,Soll}|$ is a function of the electrical frequency.

**4.** A method according to Claim 3, **characterized in that** the function is selected to be such that the magnetization becomes substantially as great as possible whilst retaining the voltage-control threshold of the converter.

**5.** A method according to Claim 4, **characterized in that** below a frequency value the function is substantially constant and above the said frequency value it drops as the electrical frequency increases.

**6.** A method according to any one of Claims 1 to 3, **characterized in that** a regulating unit is used in order to regulate the magnitude of the stator-voltage vector ($|\underline{u}_S|$) which displays the magnitude of the stator-current vector $I = |\underline{i}_{S,Soll}|$

as a correcting value.

7. A method according to any one of the preceding Claims, **characterized in that** values detected last, such as the stator-voltage vector ($u_S$) and/or the stator-current vector ($i_S$) and/or the nominal value for the stator-current vector ($i_{S,Soll}$) and/or the stator-flux vector ($\Psi_{S,mod}$) and/or their time derivations, or even higher derivations or the like, are transferred during a period of time before the end of the connexion in order to initialize any desired chronologically subsequent regulating method.

## Revendications

1. Procédé pour connecter sans couple un variateur de vitesse à un moteur asynchrone initialement démagnétisé, dans lequel le rotor tourne avant et/ou pendant la connexion à une vitesse de rotation quelconque inconnue par rapport au stator,
et dans lequel le variateur de vitesse alimente le moteur asynchrone et le variateur de vitesse présente un circuit de commande et de régulation qui régule le courant de stator du moteur asynchrone,
et dans lequel aucun capteur d'angle ni capteur de vitesse de rotation n'est nécessaire, dans lequel
un vecteur de tension de stator ($u_S$) appliqué aux bornes des enroulements de stator est déterminé par le circuit de commande et de régulation,
un vecteur de courant de stator ($i_S$) circulant à travers les enroulements de stator est déterminé
et une valeur estimative pour le vecteur de flux de stator ($\Psi_{S,mod}$) ou pour une grandeur correspondante au vecteur de flux de stator ($\Psi_{S,mod}$) est déterminée à partir du vecteur de tension de stator ($u_S$) et du vecteur de courant de stator ($i_S$),
**caractérisé en ce que**,
sans calcul du couple, une valeur de consigne pour le vecteur de courant de stator ($i_{S,Soll}$), dont la valeur absolue $I = |i_{S,Soll}|$ est prescriptible, est déterminée à partir de la valeur estimative pour le vecteur de flux de stator ($\Psi_{S,mod}$) ou la grandeur correspondante au vecteur de flux de stator ($\Psi_{S,mod}$),
et que cette valeur de consigne pour le vecteur de courant de stator ($i_{S,Soll}$) ainsi déterminée et le vecteur de courant de stator en tant que valeur réelle ($i_S$) sont amenés au régulateur de courant (11) et le régulateur de courant (11) génère une valeur pour le vecteur de tension de stator ($u_S$) de manière à réguler le courant de stator ($i_S$) sur la valeur de consigne ($i_{S,Soll}$),
la direction de la valeur de consigne pour le vecteur de courant de stator ($i_{S,Soll}$) étant choisie arbitrairement aussi longtemps que la valeur absolue du vecteur de flux de stator ($\Psi_{S,mod}$) est inférieure à une valeur seuil, et sinon la direction de la valeur de consigne pour le vecteur de courant de stator ($i_{S,Soll}$) est déterminée directement à partir de la direction du vecteur de flux de stator ($\Psi_{S,mod}$) et choisie parallèle à la direction du vecteur de flux de stator ($\Psi_{S,mod}$).

2. Procédé selon la revendication 1,
**caractérisé en ce que**,
pendant la connexion, la vitesse angulaire d'une grandeur vectorielle, telle que vecteur de flux de stator, vecteur de courant de stator, vecteur de tension ou analogue, est formée et une valeur pour la fréquence électrique est déterminée à partir d'elle.

3. Procédé selon l'une des revendications précédentes,
**caractérisé en ce que**
la valeur absolue du vecteur de courant de stator $I = |i_{S,Soll}|$ est une fonction de la fréquence électrique.

4. Procédé selon la revendication 3,
**caractérisé en ce que**
la fonction est choisie de manière que la magnétisation soit essentiellement la plus grande possible en respectant la limite de réglage de tension du variateur de vitesse.

5. Procédé selon la revendication 4,
**caractérisé en ce que**
la fonction est essentiellement constante au-dessous d'une valeur de fréquence et diminue au-dessus de cette valeur de fréquence tandis que la fréquence électrique augmente.

6. Procédé selon l'une des revendications 1 à 3,

**caractérisé en ce que**
on utilise une unité de régulation pour réguler la valeur absolue du vecteur de tension de stator ($|\underline{u}_S|$) qui délivre en tant que valeur réglante la valeur absolue du vecteur de courant de stator $I = |\underline{i}_{S,Soll}|$.

7. Procédé selon l'une des revendications précédentes,
**caractérisé en ce que**,
pendant un intervalle de temps avant achèvement de la connexion, les grandeurs déterminées en dernier lieu, telles que vecteur de tension de stator ($\underline{u}_S$) et/ou vecteur de courant de stator ($\underline{i}_S$) et/ou valeur de consigne pour le vecteur de courant de stator ($\underline{i}_{S,Soll}$) et/ou vecteur de flux de stator ($\underline{\Psi}_{S,mod}$) et/ou leurs dérivées par rapport au temps ou bien des dérivées plus élevées ou analogues, sont transmises pour l'initialisation d'un procédé de régulation quelconque suivant dans le temps.

Fig.1

**Fig. 2**

Fig. 3

Fig. 4

**EP 1 049 243 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3202906
- DE OS3543983 A
- DE 3543933
- EP 0469177 A
- DE 3543941
- DE 19503658
- DE 19532477
- EP 0780967 A2
- US 4764712 A
- US 5654624 A
- DE 4107362 A1